# EUROPÄISCHE PATENTSCHRIFT

(11) **EP 3 630 563 B1**
(45) Veröffentlichungstag und Bekanntmachung des Hinweises auf die Patenterteilung: **21.04.2021**
(21) Anmeldenummer: 18736801.4
(22) Anmeldetag: 22.05.2018
(51) Int. Cl.: B60T 13/66, B60T 17/22

(54) **BREMSVORRICHTUNG UND VERFAHREN ZUM DURCHFÜHREN EINER NOTBREMSUNG EINES SCHIENENFAHRZEUGS**
BRAKE DEVICE AND METHOD FOR CARRYING OUT EMERGENCY BRAKING OF A RAIL VEHICLE
DISPOSITIF DE FREINAGE ET PROCÉDÉ POUR L'EXÉCUTION D'UN FREINAGE D'URGENCE D'UN VÉHICULE FERROVIAIRE

(30) Priorität: 24.05.2017 DE 102017208840
(43) Veröffentlichungstag der Anmeldung: 08.04.2020
(73) Patentinhaber: KNORR-BREMSE Systeme für Schienenfahrzeuge GmbH, 80809 München (DE)
(72) Erfinder: HERDEN, Marc-Oliver, 81377 München (DE); VOIGTLÄNDER-TETZNER, Roland, 85591 Vaterstetten (DE); FISCHER, Marcus, 80469 München (DE); RIEDIGER, Oliver, 81547 München (DE)
(86) Internationale Anmeldenummer: PCT/EP2018/063323
(87) Internationale Veröffentlichungsnummer: WO 2018/215423

(56) Entgegenhaltungen:
- WO-A1-2016/075642
- DE-A1-102009 051 019
- DE-A1-102011 110 047

## Beschreibung

Die Erfindung betrifft eine Bremsvorrichtung und ein Verfahren zum Durchführen einer Notbremsung eines Schienenfahrzeugs.

Bei der Zulassung von Schienenfahrzeugen erfolgt regelmäßig auch die Prüfung des Bremssystems nach nationalen und internationalen Vorschriften. Dabei wird u.a. das Bremsvermögen des Bremssystems als sogenanntes "Bremsgewicht" ermittelt. Anhand des Bremsgewichts wird zum Beispiel bestimmt, auf welchen Streckenabschnitten das Schienenfahrzeug mit welcher Maximalgeschwindigkeit fahren darf. In der Sicherheitsrichtlinie Fahrzeug SIRF ist für Deutschland beispielsweise für den anrechenbaren Zustand der Funktion "Bremskraft erzeugen, Bremsung bei v>0" die Sicherheitsanforderungsstufe (SAS) 4 festgelegt. Die Sicherheitsanforderungsstufe stellt eine Anforderung für die Zuverlässigkeit des Systems in Abhängigkeit von der Gefährdung dar, wobei Level 4 die höchste Sicherheitsstufe darstellt. Auf europäischer Ebene wird für elektrische / elektronische Systeme die Sicherheitsanforderungsstufe nach Normen wie EN 50129 oder EN 61508 auch als Sicherheitsintegritätslevel (SIL) bezeichnet.

Schienenfahrzeuge sind in der Regel mit mehreren Bremsbauarten ausgestattet, die in den verschiedenen Bremsungsarten zum Einsatz kommen. Zu den Bremsbauarten zählen insbesondere Druckluftbremsen, aerodynamische Bremsen, elektrodynamische Bremsen, Retarderbremsen bei Dieselfahrzeugen, Magnetschienenbremsen und Wirbelstrombremsen. Zu den Bremsungsarten zählen insbesondere die Betriebsbremsung, die üblicherweise durch den Triebfahrzeugführer ausgelöst und nach seinem Ermessen verändert werden kann, und die Notbremsung, deren Eigenschaften durch ein vereinbartes Sicherheitsniveau bestimmt werden. Eine Notbremsung kann durch verschiedene Einrichtungen ausgelöst werden, wie z.B. Auslösung durch den Triebfahrzeugführer ("Schnellbremsung") oder auch Auslösung durch Zugbeeinflussungssysteme ("Zwangsbremsung"). Notbremsungen werden derzeit üblicherweise durch Reibungsbremsen, Magnetschienenbremsen, Wirbelstrombremsen und elektrodynamische Bremsen ausgeführt und werden bei einer pneumatischen Reibungsbremse zum Beispiel pneumatisch durch ein Entlüften der Hauptluftleitung oder elektrisch durch Öffnen einer Sicherheitsschleife ausgelöst.

Herkömmliche Notbremskonzepte sind wenig flexibel. In der Regel werden nur Anpassungen des Bremsdrucks hinsichtlich Last und Geschwindigkeit des Schienenfahrzeugs realisiert, und dies zumeist auch nur in diskreten Stufen. So beschreibt zum Beispiel die DE 10 2009 051 019 A1 eine geschwindigkeitsabhängig gestufte Notbremseinrichtung eines Schienenfahrzeugs mit einem hierarchischen Ablauf, wobei eine Notbremsung durch eine generatorische Bremse und/oder eine elektro-pneumatische Bremse bremskraftgeregelt und geschwindigkeitsabhängig durchgeführt wird, und offenbart zum Beispiel die DE 10 2011 110 047 A1 eine Notbremseinrichtung für ein Schienenfahrzeug mit einer Notbremssteuerventileinrichtung zum Bereitstellen eines Notbremssteuerdrucks und einer Notbremseinstelleinrichtung zum Einstellen des bereitgestellten Notbremssteuerdrucks in Abhängigkeit von einem Lastwert und einem Geschwindigkeitswert des Schienenfahrzeugs.

Es ist die Aufgabe der Erfindung, eine verbesserte Bremsvorrichtung und ein verbessertes Verfahren zum Durchführen einer Notbremsung eines Schienenfahrzeugs zu schaffen, mit denen flexibel auf aktuelle Betriebssituationen reagiert werden kann. Diese Aufgabe wird gelöst durch die Lehre der unabhängigen Ansprüche. Bevorzugte Weiterbildungen der Erfindung sind Gegenstand der abhängigen Ansprüche.

Die erfindungsgemäße Bremsvorrichtung zum Durchführen einer Notbremsung eines Schienenfahrzeugs weist wenigstens einen Bremszylinder, eine Druckregeleinrichtung zum Bereitstellen eines Bremszylinderdrucks für den Bremszylinder und eine Steuereinrichtung zum Ansteuern der Druckregeleinrichtung auf und ist dadurch gekennzeichnet, dass die Steuereinrichtung eine Steuerung und wenigstens eine weitere Steuerung jeweils zum Ansteuern der Druckregeleinrichtung aufweist, wobei die verschiedenen Steuerungen der Steuereinrichtung nach unterschiedlichen Sicherheitsintegritätslevels ausgestaltet sind.

Durch das Bereitstellen von mehreren Steuerungen, die nach unterschiedlichen Sicherheitsintegritätslevels ausgestaltet sind, zum Ansteuern der Druckregeleinrichtung kann eine größere Flexibilität bei der Ansteuerung der Druckregeleinrichtung erzielt werden, und dies auch für das Durchführen einer Notbremsung des Schienenfahrzeugs. Je nach aktueller Betriebssituation kann eine der mehreren Steuerungen für die Ansteuerung der Druckregeleinrichtung ausgewählt werden, welche unter verschiedenen Aspekten (reine Sicherheit, Sicherheit und Verschleiß der Bremssysteme, etc.) eine Optimierung des Notbremsvorgangs ermöglicht. Diese Anpassung der Ansteuerung der Druckregeleinrichtung ist bei der erfindungsgemäßen Bremsvorrichtung insbesondere auch kontinuierlich während eines Notbremsvorgangs möglich.

Die Steuerung und die weitere Steuerung können in einem gemeinsamen Steuergerät integriert sein, als separate Steuergeräte ausgebildet sein, als separate Steuerungen in unterschiedliche Komponenten (z.B. Druckregler) der Druckregeleinrichtung integriert sein, und dergleichen. Die unterschiedlichen Sicherheitsintegritätslevels der verschiedenen Steuerungen können durch entsprechende Hardware und/oder Software realisiert werden. Die Steuerungen können beispielsweise - je nach gewünschten Sicherheitsintegritätslevel - einen einfachen Schalter zum Einschalten/Ausschalten bzw. Öffnen/Schließen eines Ventils, einen Mikrocontroller (µC), ein Field Programmable Gate Array (FPGA) oder einen Kern eines Prozessors aufweisen.

In einer vorteilhaften Ausgestaltung der Erfindung weist die Druckregeleinrichtung einen elektro-pneumatischen Druckregler auf, der ausgehend von einem bereitgestellten Versorgungsdruck einen Vorsteuerdruck erzeugt, der in einen entsprechenden Bremszylinderdruck (Pb) umsetzbar ist. Bei dieser Ausgestaltung weist die Steuereinrichtung vorzugsweise als die eine Steuerung eine erste Steuerung, die nach einem ersten Sicherheitsintegritätslevel ausgestaltet ist, zum Ansteuern des elektro-pneumatischen Druckreglers und als eine weitere Steuerung eine zweite Steuerung, die nach einem zweiten, vom ersten Sicherheitsintegritätslevel verschiedenen Sicherheitsintegritätslevel ausgestaltet ist, zum Ansteuern des elektro-pneumatischen Druckreglers auf.

In einer anderen vorteilhaften Ausgestaltung der Erfindung weist die Druckregeleinrichtung einen elektro-pneumatischen Druckregler, der ausgehend von einem bereitgestellten Versorgungsdruck einen ersten Vorsteuerdruck erzeugt, der in einen entsprechenden Bremszylinderdruck umsetzbar ist, und einen pneumatischen Druckregler, der ausgehend von dem bereitgestellten Versorgungsdruck einen zweiten Vorsteuerdruck erzeugt, der in einen entsprechenden Bremszylinderdruck umsetzbar ist, auf. Bei dieser Ausgestaltung weist die Steuereinrichtung vorzugsweise als die eine Steuerung eine erste Steuerung, die nach einem ersten Sicherheitsintegritätslevel ausgestaltet ist, zum Ansteuern des elektro-pneumatischen Druckreglers und als eine weitere Steuerung eine dritte Steuerung, die nach einem dritten, vom ersten Sicherheitsintegritätslevel verschiedenen Sicherheitsintegritätslevel ausgestaltet ist, zum Ansteuern des pneumatischen Druckreglers auf.

In einer vorteilhaften Weiterbildung der letztgenannten Ausgestaltung weist die Steuereinrichtung vorzugsweise ferner als eine weitere Steuerung eine zweite Steuerung auf, die nach einem zweiten, vom ersten Sicherheitsintegritätslevel und vom dritten Sicherheitsintegritätslevel verschiedenen Sicherheitsintegritätslevel ausgestaltet ist, zum Ansteuern des elektro-pneumatischen Druckreglers auf.

Bei Ausgestaltungen mit zwei Steuerungen zum Ansteuern des elektro-pneumatischen Druckreglers erzeugt der elektro-pneumatische Druckregler vorzugsweise bei einer Ansteuerung durch die erste Steuerung der Steuereinrichtung einen ersten Vorsteuerdruck entsprechend einem Basis-Bremsdruck und bei einer Ansteuerung durch die zweite Steuerung der Steuereinrichtung in Abhängigkeit von einer Last und/oder einer Geschwindigkeit des Schienenfahrzeugs einen ersten Vorsteuerdruck entsprechend einem im Vergleich zum Basis-Bremsdruck vergrößerten oder verkleinerten Bremsdruck.

In einer weiteren vorteilhaften Ausgestaltung der Erfindung ist die Steuereinrichtung ausgestaltet, um eine Ansteuerwirkung durch eine Steuerung mit einem niedrigeren Sicherheitsintegritätslevel zu überwachen und bei Unterschreiten eines vorbestimmten Grenzwerts für die Ansteuerwirkung die Ansteuerung der Druckregeleinrichtung mit einer Steuerung mit einem höheren Sicherheitsintegritätslevel auszuführen. Mit anderen Worten hat die Steuerung mit dem höheren Sicherheitsintegritätslevel eine höhere Priorität bei der Ansteuerung der Druckregeleinrichtung, sodass ein hohes Sicherheitsniveau für die Notbremsung sichergestellt werden kann. Die Ansteuerwirkung kann beispielsweise anhand des erzeugten Vorsteuerdrucks und/oder des aus diesem umgesetzten Bremszylinderdrucks überprüft werden.

In einer weiteren vorteilhaften Ausgestaltung der Erfindung weist die Druckregeleinrichtung ferner einen Druckselektor zum Auswählen eines größeren Vorsteuerdrucks des ersten und des zweiten Vorsteuerdrucks aufweist. Durch diese Maßnahme kann sichergestellt werden, dass der aus dem Vorsteuerdruck umgesetzte Bremszylinderdruck einen vorbestimmten Grenzwert nicht unterschreitet.

In einer noch weiteren vorteilhaften Ausgestaltung der Erfindung weist die Druckregeleinrichtung ferner einen Druckkorrektor zum Korrigieren eines ausgehend von dem bereitgestellten Versorgungsdruck erzeugten Vorsteuerdrucks basierend auf wenigstens einer aktuellen Zustandsgröße des Schienenfahrzeugs auf, wobei der so erzeugte korrigierte Vorsteuerdruck in einen entsprechenden Bremszylinderdruck umsetzbar ist. In einer Ausführungsform kann der Druckkorrektor den Vorsteuerdruck basierend auf einer pneumatischen Information über die aktuelle Last des Schienenfahrzeugs korrigieren.

Gegenstand der Erfindung ist auch ein Schienenfahrzeug mit wenigstens einer oben beschriebenen Bremsvorrichtung der Erfindung.

Das erfindungsgemäße Verfahren zum Durchführen einer Notbremsung eines Schienenfahrzeugs, bei dem wenigstens einem Bremszylinder durch eine Druckregeleinrichtung ein Bremszylinderdruck bereitgestellt wird, ist dadurch gekennzeichnet, dass der Bremszylinderdruck nach einem vorbestimmten Sicherheitsintegritätslevel generiert wird, welches aus wenigstens zwei unterschiedlichen Sicherheitsintegritätslevels ausgewählt wird, die in der Druckregeleinrichtung zur Verfügung stehen.

Durch das Bereitstellen von mehreren unterschiedlichen Sicherheitsintegritätslevels zum Generieren des Bremszylinderdrucks durch die Druckregeleinrichtung kann eine größere Flexibilität erzielt werden, und dies auch für das Durchführen einer Notbremsung des Schienenfahrzeugs. Je nach aktueller Betriebssituation kann eines der mehreren Sicherheitsintegritätslevels ausgewählt werden, das einerseits für diese Betriebssituation eine ausreichende Sicherheit für den Notbremsvorgang gewährleistet und andererseits unter anderen Aspekten (z.B. Verschleiß der Bremssysteme, etc.) eine Optimierung des Notbremsvorgangs ermöglicht. Diese Anpassung des Bremszylinderdrucks ist mit dem erfindungsgemäßen Verfahren insbesondere auch kontinuierlich während eines Notbremsvorgangs möglich.

In einer vorteilhaften Ausgestaltung der Erfindung wird der Bremszylinderdruck aus einem Vorsteuerdruck erzeugt, der durch einen elektro-pneumatischen Druckregler ausgehend von einem Versorgungsdruck nach einem vorbestimmten Sicherheitsintegritätslevel generiert wird, welches aus wenigstens zwei unterschiedlichen Sicherheitsintegritätslevels ausgewählt wird.

In einer anderen vorteilhaften Ausgestaltung der Erfindung wird der Bremszylinderdruck aus einem ersten Vorsteuerdruck, der durch einen elektro-pneumatischen Druckregler ausgehend von einem Versorgungsdruck nach einem ersten Sicherheitsintegritätslevel generiert wird, oder einem zweiten Vorsteuerdruck, der durch einen pneumatischen Druckregler ausgehend von einem Versorgungsdruck nach einem dritten, vom ersten Sicherheitsintegritätslevel verschiedenen vorbestimmten Sicherheitsintegritätslevel generiert wird, erzeugt.

Bei der letztgenannten Ausgestaltung wird das erste Sicherheitsintegritätslevel vorzugsweise aus wenigstens zwei unterschiedlichen Sicherheitsintegritätslevels ausgewählt.

In einer vorteilhaften Ausgestaltung der Erfindung erzeugt der elektro-pneumatische Druckregler bei Auswahl eines ersten Sicherheitsintegritätslevels einen ersten Vorsteuerdruck entsprechend einem Basis-Bremsdruck und bei Auswahl eines vom ersten Sicherheitsintegritätslevel verschiedenen zweiten Sicherheitsintegritätslevels in Abhängigkeit von einer Last und/oder einer Geschwindigkeit des Schienenfahrzeugs einen ersten Vorsteuerdruck entsprechend einem im Vergleich zum Basis-Bremsdruck vergrößerten oder verkleinerten Bremsdruck.

In einer weiteren vorteilhaften Ausgestaltung der Erfindung wird eine Wirkung eines niedrigeren Sicherheitsintegritätslevels überwacht und wird bei Unterschreiten eines vorbestimmten Grenzwerts für die Wirkung der Bremszylinderdruck nach einem höheren Sicherheitsintegritätslevel generiert. Die Wirkung kann beispielsweise anhand eines in der Druckregeleinrichtung erzeugten Vorsteuerdrucks und/oder des aus diesem umgesetzten Bremszylinderdrucks überprüft werden.

In einer weiteren vorteilhaften Ausgestaltung der Erfindung wird ein ausgehend von dem bereitgestellten Versorgungsdruck erzeugter Vorsteuerdruck basierend auf wenigstens einer aktuellen Zustandsgröße des Schienenfahrzeugs korrigiert und wird der so erzeugte korrigierte Vorsteuerdruck dann in einen entsprechenden Bremszylinderdruck umgesetzt.

Vorzugsweise wird die Auswahl eines Sicherheitsintegritätslevels während eines Notbremsvorgangs kontinuierlich durchgeführt.

Obige sowie weitere Vorteile, Merkmale und Anwendungsmöglichkeiten der Erfindung werden aus der nachfolgenden Beschreibung verschiedener Ausführungsbeispiele anhand der beiliegenden Zeichnungen besser verständlich. Darin zeigen, größtenteils schematisch:
- Fig. 1: ein stark vereinfachtes Schema des Grundaufbaus einer Bremsvorrichtung gemäß der vorliegenden Erfindung;
- Fig. 2: den Aufbau einer Bremsvorrichtung gemäß einem ersten Ausführungsbeispiel der Erfindung;
- Fig. 3: den Aufbau einer Bremsvorrichtung gemäß einem zweiten Ausführungsbeispiel der Erfindung; und
- Fig. 4: den Aufbau einer Bremsvorrichtung gemäß einem dritten Ausführungsbeispiel der Erfindung.

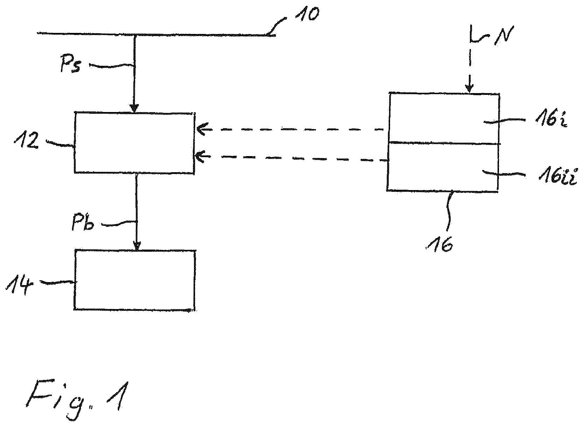

Bezug nehmend auf Fig. 1 soll zunächst das Grundprinzip der Erfindung näher erläutert werden.

Die Bremsvorrichtung ist mit einem Druckreservoir 10 zum Beispiel in Form eines Druckluftspeichers oder einer Druckluftleitung verbunden, das einen Versorgungsdruck Ps bereitstellt. Dieser Versorgungsdruck Ps wird einer Druckregeleinrichtung 12 zur Verfügung gestellt, die ausgangsseitig einen Bremszylinderdruck Pb bereitstellt, der mindestens einem Bremszylinder 14 zugeführt wird, um eine Bremswirkung zu erzeugen.

Die Bremsvorrichtung weist ferner eine Steuereinrichtung 16 auf, welche die Druckregeleinrichtung 12 ansteuert. Insbesondere steuert die Steuereinrichtung 16 die Druckregeleinrichtung 12 zum Durchführen einer Notbremsung des Schienenfahrzeugs an, wenn die Steuereinrichtung 16 ein Notbremssignal N empfängt, zum Beispiel vom Triebfahrzeugführer oder von einem Zugbeeinflussungssystem.

Wie in Fig. 1 veranschaulicht, weist die Steuereinrichtung 16 eine Steuerung 16i, die nach einem vorbestimmten Sicherheitsintegritätslevel ausgestaltet ist, und eine weitere Steuerung 16ii, die nach einem anderen vorbestimmten Sicherheitsintegritätslevel, das sich von dem Sicherheitsintegritätslevel der Steuerung 16i unterscheidet, ausgestaltet ist, auf.

Die Steuerungen 16i, 16ii der Steuereinrichtung 16 können zum Beispiel in einem gemeinsamen Steuergerät integriert sein, als separate Steuergeräte ausgebildet sein oder als separate Steuerungen in unterschiedlichen Komponenten (z.B. Druckregler) der Druckregeleinrichtung integriert sein. Die unterschiedlichen Sicherheitsintegritätslevel der Steuerungen 16i, 16ii können durch entsprechende Hardware und/oder Software realisiert sein.

Bei dieser Bremsvorrichtung kann die Druckregeleinrichtung 12 beispielsweise zunächst durch die eine Steuerung 16i mit einem niedrigeren Sicherheitsintegritätslevel angesteuert werden, welche aber im Hinblick auf andere Aspekte wie Verschleiß der Bremssysteme, Einhaltung des Fahrplans, etc. optimiert ist. Falls der auf diese Wiese in der Druckregeleinrichtung erzeugte Vorsteuerdruck oder der aus diesem umgesetzte Bremszylinderdruck Pb für eine sichere Notbremsung nicht ausreichen sollten, was durch die Steuereinrichtung 16 oder deren weitere Steuerung 16ii überwacht wird, dann wird die Druckregeleinrichtung 12 durch die weitere Steuerung 16ii mit einem höheren Sicherheitsintegritätslevel angesteuert, welche im Hinblick auf die Sicherheit optimiert ist.

Vorzugsweise wird die Überwachung des durch die eine Steuerung 16i mit einem niedrigeren Sicherheitsintegritätslevel erzeugbaren Vorsteuerdrucks bzw. Bremszylinderdrucks auch während der Ansteuerung durch die weitere Steuerung 16ii mit einem höheren Sicherheitsintegritätslevel fortgesetzt. Sollte im Laufe des Notbremsvorgangs die Ansteuerung durch die eine Steuerung 16i mit einem niedrigeren Sicherheitsintegritätslevel wieder ausreichend werden, so kann die Ansteuerung der Druckregeleinrichtung 12 wieder durch diese eine Steuerung 16i erfolgen. Die Überwachung wird dann natürlich fortgesetzt, um gegebenenfalls wieder auf die Ansteuerung der Druckregeleinrichtung 12 durch die weitere Steuerung 16ii umzuschalten.

Der Notbremsvorgang kann auf diese Weise flexibel und kontinuierlich an die aktuelle Betriebssituation des Schienenfahrzeugs angepasst werden.

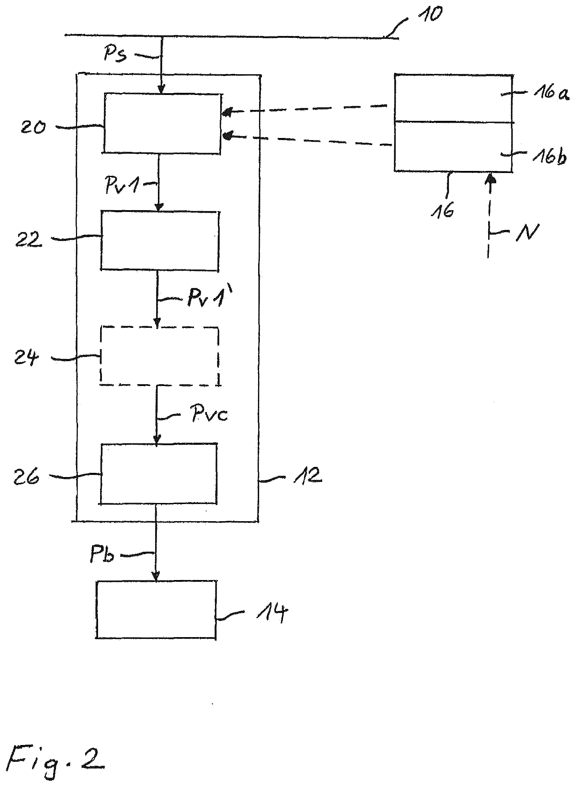

**Fig. 2** zeigt eine Bremsvorrichtung gemäß einem ersten Ausführungsbeispiel der Erfindung in mehr Einzelheiten.

In diesem Ausführungsbeispiel weist die Druckregeleinrichtung 12 einen elektro-pneumatischen Druckregler 20 auf, der von der Steuereinrichtung 16 mit einer ersten Steuerung 16a mit einem ersten Sicherheitsintegritätslevel (z.B. SIL2) und einer zweiten Steuerung 16b mit einem zweiten Sicherheitsintegritätslevel (z.B. SIL3), das höher als das erste Sicherheitsintegritätslevel ist, angesteuert wird. Die erste Steuerung 16a weist beispielsweise einen µC auf, und die zweite Steuerung weist beispielsweise einen FPGA auf. Die zweite Steuerung 16b mit dem höheren Sicherheitsintegritätslevel kann dabei die erste Steuerung 16a mit dem niedrigeren Sicherheitsintegritätslevel bei Bedarf überschreiben.

Wenn die Steuereinrichtung 16 ein Notbremssignal N empfängt, steuert sie die Druckregeleinrichtung 12 zum Durchführen einer Notbremsung an. Hierbei wertet die Steuereinrichtung 16 bzw. deren Steuerungen 16a, 16b verschiedene Messwerte (z.B. Geschwindigkeit, Beschleunigung, Last, Zustand der Bremssysteme, Wetterbedingungen, Bremsmoment, Fahrplan, etc.) aus und gibt entsprechende Sollgrößen bzw. Steuersignale an die Druckregeleinrichtung 12. Je nach Ergebnis der oben anhand von Fig. 1 erläuterten Überwachung der Ansteuerwirkung der ersten Steuerung 16a wird der elektro-pneumatische Druckregler 20 von der ersten Steuerung 16a oder der zweiten Steuerung 16b angesteuert.

Der elektro-pneumatische Druckregler 20 erzeugt dann ausgehend von dem vom Druckreservoir 10 bereitgestellten Versorgungsdruck Ps entsprechend der Ansteuerung durch die Steuereinrichtung 16 einen ersten Vorsteuerdruck Pv1. Dieser erste Vorsteuerdruck Pv1 kann optional in einem nachgeschalteten Druckbegrenzer 22 begrenzt werden.

Der so begrenzte erste Vorsteuerdruck Pv1' kann anschließend optional in einem nachgeschalteten Druckkorrektor 24 korrigiert werden. Dieser Druckkorrektor 24 empfängt beispielsweise rein pneumatische eine Information über die Last des Schienenfahrzeugs und setzt den Vorsteuerdruck Pv1' entsprechend um (sog. "EDU").

Der so korrigierte Vorsteuerdruck Pvc steuert schließlich ein Relais-Ventil 26 der Druckregeleinrichtung 12 an, um den Bremszylinderdruck Pb zu generieren, der wenigstens einem Bremszylinder 14 zur Verfügung gestellt wird.

In einer Ausführungsform erzeugt der elektro-pneumatische Druckregler 20 bei einer Ansteuerung durch die erste Steuerung 16a einen ersten Vorsteuerdruck Pv1 entsprechend einem Basis-Bremsdruck und bei einer Ansteuerung durch die zweite Steuerung 16b in Abhängigkeit von einer Last und/oder einer Geschwindigkeit des Schienenfahrzeugs einen ersten Vorsteuerdruck Pv1 entsprechend einem im Vergleich zum Basis-Bremsdruck vergrößerten oder verkleinerten Bremsdruck.

In einer Ausführungsform kann zum Beispiel der Bremszylinderdruck Pb zunächst mittels der ersten Steuerung 16a mit erhöhter Variabilität (z.B. mittels eines µC, SIL2) geregelt werden, um eine optimale Performance der Notbremsung zu erreichen. Dies kann auch die Berücksichtigung einer höheren Anzahl an Parametern oder Sensordaten beinhalten. Parallel hierzu wird eine zweite Steuerung 16b eingesetzt, die hinsichtlich der Leistungsfähigkeit der darauf ablaufenden Programme eingeschränkt ist, aber mit höherer Sicherheitsintegrität arbeitet (z.B. FPGA, SIL3). Außerdem kann der FPGA die Ansteuerung durch den µC beobachten und hinsichtlich definierter Kriterien überprüfen. Diese können beispielsweise ein definierter Backup-Druck sein. Läuft der mittels µC erzielbare Druck aus dem vom FPGA vorgegebenen Rahmen, übernimmt der FPGA die Kontrolle und regelt mit hoher Sicherheitsintegrität, jedoch geringerer Variabilität (weniger Parameter/Sensorsignale) einen Rückfall-Druck ein.

In einer Ausführungsvariante der Erfindung kann die eigentliche Druckregelung ausschließlich durch den FPGA erfolgen. Bei dieser Variante gibt der µC lediglich Vorschläge ab, welche vom FPGA überprüft und in der Regel realisiert werden. Nur in Ausnahmefällen (z.B. bei Fehlverhalten des µC) werden diese Vorschläge übergangen und andere Werte durch den FPGA eingeregelt.

Neben einer Realisierung der Steuereinrichtung 16 mit µC als erster Steuerung 16a und FPGA als zweiter Steuerung 16b ist zum Beispiel auch die Realisierung über einen Prozessor mit Kernen unterschiedlicher Sicherheitsintegritätslevels denkbar.

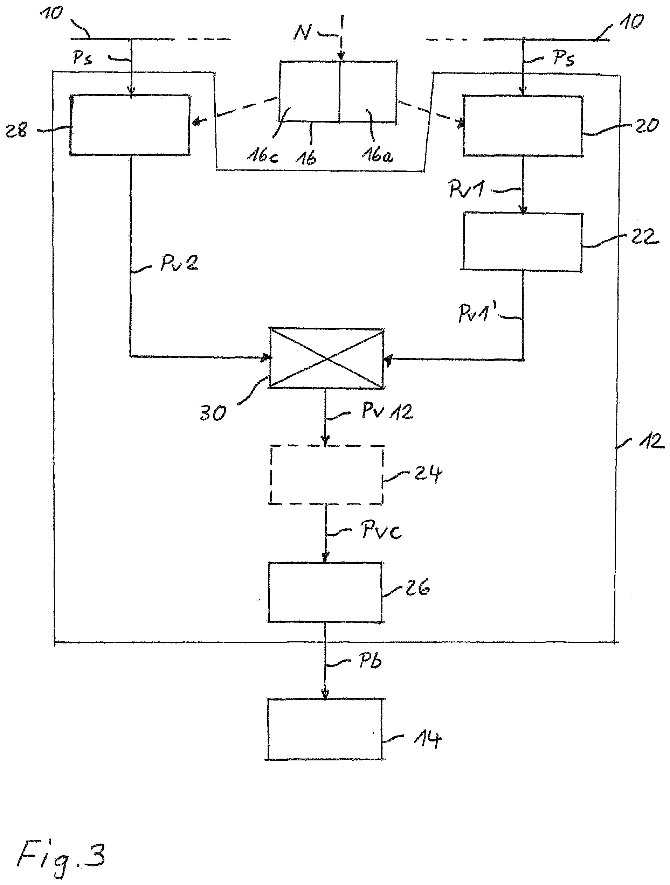

**Fig. 3** zeigt eine Bremsvorrichtung gemäß einem zweiten Ausführungsbeispiel der Erfindung in mehr Einzelheiten.

In diesem Ausführungsbeispiel weist die Druckregeleinrichtung 12 einen elektro-pneumatischen Druckregler 20 und einen pneumatischen Druckregler 28 auf. Die Steuereinrichtung 16 enthält eine erste Steuerung 16a mit einem ersten Sicherheitsintegritätslevel (z.B. SIL2 oder SIL3) zum Ansteuern des elektro-pneumatischen Druckreglers 20 und eine dritte Steuerung 16c mit einem dritten Sicherheitsintegritätslevel (z.B. SIL4), das höher als das erste Sicherheitsintegritätslevel ist, zum Ansteuern des pneumatischen Druckreglers 28. Die erste Steuerung 16a weist beispielsweise einen µC auf, und die dritte Steuerung 16c weist beispielsweise einen einfachen Schalter auf.

Wenn die Steuereinrichtung 16 ein Notbremssignal N empfängt, steuert sie die Druckregeleinrichtung 12 zum Durchführen einer Notbremsung an. Einerseits schaltet ihre dritte Steuerung 16c den pneumatischen Druckregler 28 ein, andererseits wertet ihre erste Steuerung 16a verschiedene Messwerte aus und gibt entsprechende Sollgrößen bzw. Steuersignale an den elektro-pneumatischen Druckregler 20.

Im ersten Kanal der Druckregeleinrichtung 12 erzeugt der elektro-pneumatische Druckregler 20 dann ausgehend von dem vom Druckreservoir 10 bereitgestellten Versorgungsdruck Ps entsprechend der Ansteuerung durch die erste Steuerung 16a der Steuereinrichtung 16 einen variablen ersten Vorsteuerdruck Pv1. Dieser erste Vorsteuerdruck Pv1 kann optional in einem nachgeschalteten Druckbegrenzer 22 begrenzt werden. Im zweiten Kanal der Druckregeleinrichtung 12 erzeugt der pneumatische Druckregler 28 ausgehend von dem vom Druckreservoir 10 bereitgestellten Versorgungsdruck Ps einen fest vorgegebenen zweiten Vorsteuerdruck Pv2.

Ein Druckselektor 30 der Druckregeleinrichtung 12 wählt dann den größeren Vorsteuerdruck Pv12 aus dem ersten Vorsteuerdruck Pv1 bzw. dem korrigierten ersten Vorsteuerdruck Pv1' und dem zweiten Vorsteuerdruck Pv2 aus und leitet diesen weiter. Der Druckselektor 30 kann zu diesem Zweck beispielsweise ein Doppelrückschlagventil aufweisen.

In einer Ausführungsform erzeugt der pneumatische Druckregler 28 einen zweiten Vorsteuerdruck Pv2 entsprechend einem Basis-Bremsdruck und erzeugt der elektro-pneumatische Druckregler 20 in Abhängigkeit von einer Last und/oder einer Geschwindigkeit des Schienenfahrzeugs einen ersten Vorsteuerdruck Pv1 entsprechend einem im Vergleich zum Basis-Bremsdruck vergrößerten oder verkleinerten Bremsdruck.

Vorzugsweise erzeugt der pneumatische Druckregler 28 einen zweiten Vorsteuerdruck Pv2, der letztlich in einen Bremszylinderdruck Pb umgesetzt werden kann, der einem minimalen Bremsdruck für eine Notbremsung entspricht. So kann mittels des Druckselektors 30 sichergestellt werden, dass durch die Druckregeleinrichtung 12 immer mindestens der minimale Bremsdruck für eine Notbremsung als Bremszylinderdruck Pb bereitgestellt wird.

Bei Ausfall des elektro-pneumatischen Druckreglers 20 stellt der pneumatische Druckregler 28 einen Mindestbremsdruck sicher. Andererseits stellt der elektro-pneumatische Druckregler 20 bei Ausfall des pneumatischen Druckreglers 28 die weitere Funktionsfähigkeit der Bremsvorrichtung sicher.

Der so ausgewählte größere Vorsteuerdruck Pv12 kann anschließend analog zum ersten Ausführungsbeispiel optional in einem nachgeschalteten Druckkorrektor 24 korrigiert werden.

Der so korrigierte Vorsteuerdruck Pvc wird schließlich in einem Relais-Ventil 26 der Druckregeleinrichtung 12 in den Bremszylinderdruck Pb umgesetzt, der wenigstens einem Bremszylinder 14 zur Verfügung gestellt wird.

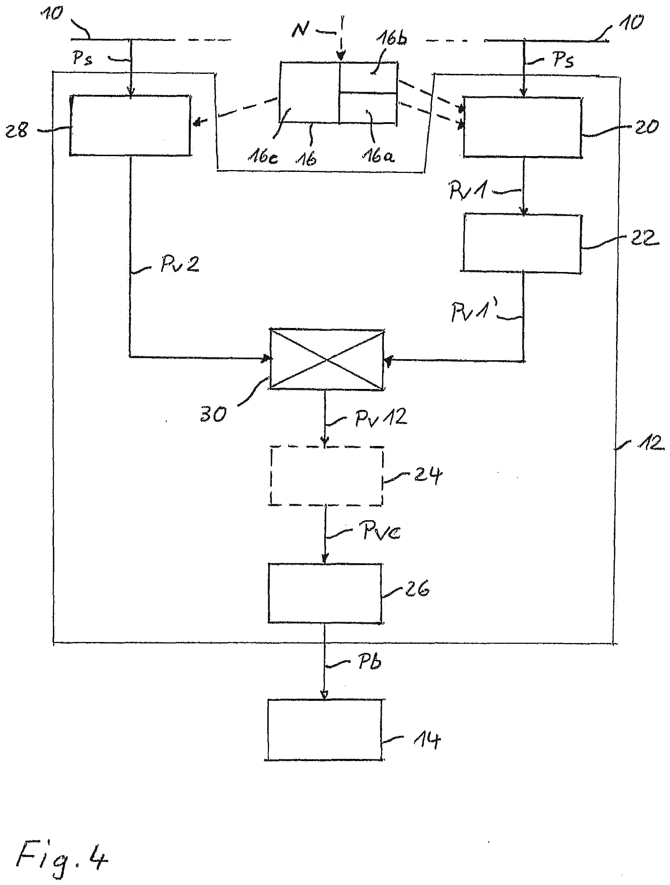

**Fig. 4** zeigt eine Bremsvorrichtung gemäß einem dritten Ausführungsbeispiel der Erfindung in mehr Einzelheiten. Dieses dritte Ausführungsbeispiel basiert auf einer Kombination der obigen ersten und zweiten Ausführungsbeispiele.

In diesem Ausführungsbeispiel weist die Druckregeleinrichtung 12 einen elektro-pneumatischen Druckregler 20 und einen pneumatischen Druckregler 28 auf. Die Steuereinrichtung 16 enthält eine erste Steuerung 16a mit einem ersten Sicherheitsintegritätslevel (z.B. SIL2) zum Ansteuern des elektro-pneumatischen Druckreglers 20, eine zweite Steuerung 16b mit einem zweiten Sicherheitsintegritätslevel (z.B. SIL3), das höher als das erste Sicherheitsintegritätslevel ist, zum Ansteuern des elektro-pneumatischen Druckreglers 20 und eine dritte Steuerung 16c mit einem dritten Sicherheitsintegritätslevel (z.B. SIL4), das ebenfalls höher als das erste Sicherheitsintegritätslevel ist, zum Ansteuern des pneumatischen Druckreglers 28. Die erste Steuerung 16a weist beispielsweise einen µC auf, die zweite Steuerung 16b weist beispielsweise einen FPGA auf, und die dritte Steuerung 16c weist beispielsweise einen einfachen Schalter auf.

Wenn die Steuereinrichtung 16 ein Notbremssignal N empfängt, steuert sie die Druckregeleinrichtung 12 zum Durchführen einer Notbremsung an. Einerseits schaltet ihre dritte Steuerung 16c den pneumatischen Druckregler 28 ein. Andererseits werten ihre erste Steuerung 16a und ihre zweite Steuerung 16b verschiedene Messwerte aus und geben entsprechende Sollgrößen bzw. Steuersignale an den elektro-pneumatischen Druckregler 20. Je nach Ergebnis der oben anhand von Fig. 1 erläuterten Überwachung der Ansteuerwirkung der ersten Steuerung 16a wird der elektro-pneumatische Druckregler 20 von der ersten Steuerung 16a oder der zweiten Steuerung 16b angesteuert.

Im ersten Kanal der Druckregeleinrichtung 12 erzeugt der elektro-pneumatische Druckregler 20 dann ausgehend von dem vom Druckreservoir 10 bereitgestellten Versorgungsdruck Ps entsprechend der Ansteuerung durch die erste Steuerung 16a oder die zweite Steuerung 16b der Steuereinrichtung 16 einen variablen ersten Vorsteuerdruck Pv1. Dieser erste Vorsteuerdruck Pv1 kann optional in einem nachgeschalteten Druckbegrenzer 22 begrenzt werden. Im zweiten Kanal der Druckregeleinrichtung 12 erzeugt der pneumatische Druckregler 28 ausgehend von dem vom Druckreservoir 10 bereitgestellten Versorgungsdruck Ps einen fest vorgegebenen zweiten Vorsteuerdruck Pv2.

Analog zum obigen zweiten Ausführungsbeispiel wählt dann ein Druckselektor 30 der Druckregeleinrichtung 12 den größeren Vorsteuerdruck Pv12 aus dem (korrigierten) ersten Vorsteuerdruck Pv1 bzw. Pv1' und dem zweiten Vorsteuerdruck Pv2 aus und leitet diesen weiter. Der so ausgewählte größere Vorsteuerdruck Pv12 kann anschließend optional in einem nachgeschalteten Druckkorrektor 24 korrigiert werden.

Der so korrigierte Vorsteuerdruck Pvc wird schließlich in einem Relais-Ventil 26 der Druckregeleinrichtung 12 in den Bremszylinderdruck Pb umgesetzt, der wenigstens einem Bremszylinder 14 zur Verfügung gestellt wird.

### BEZUGSZEICHENLISTE

- 10: Druckreservoir
- 12: Druckregeleinrichtung
- 14: Bremszylinder
- 16: Steuereinrichtung
- 16a: erste Steuerung mit erstem Sicherheitsintegritätslevel
- 16b: zweite Steuerung mit zweitem Sicherheitsintegritätslevel
- 16c: dritte Steuerung mit drittem Sicherheitsintegritätslevel
- 16i: Steuerung mit einem Sicherheitsintegritätslevel
- 16ii: weitere Steuerung mit einem anderen Sicherheitsintegritätslevel
- 20: elektro-pneumatischer Druckregler
- 22: Druckbegrenzer
- 24: Druckkorrektor
- 26: Relais-Ventil
- 28: pneumatischer Druckregler
- 30: Druckselektor

- N: Notbremssignal
- Pb: Bremszylinderdruck
- Ps: Versorgungsdruck
- Pv1: erster Vorsteuerdruck
- Pv1': begrenzter erster Vorsteuerdruck
- Pv2: zweiter Vorsteuerdruck
- Pv12: größerer Vorsteuerdruck
- Pvc: korrigierter Vorsteuerdruck

## Patentansprüche

1. Bremsvorrichtung zum Durchführen einer Notbremsung eines Schienenfahrzeugs, aufweisend:
wenigstens einen Bremszylinder (14);
eine Druckregeleinrichtung (12) zum Bereitstellen eines Bremszylinderdrucks (Pb) für den Bremszylinder (14); und
eine Steuereinrichtung (16) zum Ansteuern der Druckregeleinrichtung (12),
**dadurch gekennzeichnet, dass**
die Steuereinrichtung (16) eine Steuerung (16i) und wenigstens eine weitere Steuerung (16ii) jeweils zum Ansteuern der Druckregeleinrichtung (12) aufweist, wobei die verschiedenen Steuerungen (16i, 16ii) der Steuereinrichtung (16) nach unterschiedlichen Sicherheitsintegritätslevels ausgestaltet sind.

2. Bremsvorrichtung nach Anspruch 1, bei welcher
die Druckregeleinrichtung (12) einen elektro-pneumatischen Druckregler (20) aufweist, der ausgehend von einem bereitgestellten Versorgungsdruck (Ps) einen Vorsteuerdruck (Pv1) erzeugt, der in einen entsprechenden Bremszylinderdruck (Pb) umsetzbar ist; und
die Steuereinrichtung (16) als die eine Steuerung (16i) eine erste Steuerung (16a), die nach einem ersten Sicherheitsintegritätslevel ausgestaltet ist, zum Ansteuern des elektro-pneumatischen Druckreglers (20) und als eine weitere Steuerung (16ii) eine zweite Steuerung (16b), die nach einem zweiten, vom ersten Sicherheitsintegritätslevel verschiedenen Sicherheitsintegritätslevel ausgestaltet ist, zum Ansteuern des elektro-pneumatischen Druckreglers (20) aufweist.

3. Bremsvorrichtung nach Anspruch 1, bei welcher
die Druckregeleinrichtung (12) einen elektro-pneumatischen Druckregler (20), der ausgehend von einem bereitgestellten Versorgungsdruck (Ps) einen ersten Vorsteuerdruck (Pv1) erzeugt, der in einen entsprechenden Bremszylinderdruck (Pb) umsetzbar ist, und einen pneumatischen Druckregler (28), der ausgehend von dem bereitgestellten Versorgungsdruck (Ps) einen zweiten Vorsteuerdruck (Pv2) erzeugt, der in einen entsprechenden Bremszylinderdruck (Pb) umsetzbar ist, aufweist; und
die Steuereinrichtung (16) als die eine Steuerung (16i) eine erste Steuerung (16a), die nach einem ersten Sicherheitsintegritätslevel ausgestaltet ist, zum Ansteuern des elektro-pneumatischen Druckreglers (20) und als eine weitere Steuerung (16ii) eine dritte Steuerung (16c), die nach einem dritten, vom ersten Sicherheitsintegritätslevel verschiedenen Sicherheitsintegritätslevel ausgestaltet ist, zum Ansteuern des pneumatischen Druckreglers (28) aufweist.

4. Bremsvorrichtung nach Anspruch 2, bei welcher
der elektro-pneumatische Druckregler (20) bei einer Ansteuerung durch die erste Steuerung (16a) der Steuereinrichtung (16) einen ersten Vorsteuerdruck (Pv1) entsprechend einem Basis-Bremsdruck erzeugt und bei einer Ansteuerung durch die zweite Steuerung (16b) der Steuereinrichtung (16) in Abhängigkeit von einer Last und/oder einer Geschwindigkeit des Schienenfahrzeugs einen ersten Vorsteuerdruck (Pv1) entsprechend einem im Vergleich zum Basis-Bremsdruck vergrößerten oder verkleinerten Bremsdruck erzeugt.

5. Bremsvorrichtung nach einem der vorhergehenden Ansprüche, bei welcher
die Steuereinrichtung (16) ausgestaltet ist, um eine Ansteuerwirkung durch eine Steuerung mit einem niedrigeren Sicherheitsintegritätslevel zu überwachen und bei Unterschreiten eines vorbestimmten Grenzwerts für die Ansteuerwirkung die Ansteuerung der Druckregeleinrichtung (12) mit einer Steuerung mit einem höheren Sicherheitsintegritätslevel auszuführen.

6. Bremsvorrichtung nach einem der Ansprüche 3 bis 5, bei welcher
die Druckregeleinrichtung (12) einen Druckselektor (30) zum Auswählen eines größeren Vorsteuerdrucks (Pv12) des ersten und des zweiten Vorsteuerdrucks (Pv1, Pv2) aufweist.

7. Bremsvorrichtung nach einem der vorhergehenden. Ansprüche, bei welcher
die Druckregeleinrichtung (12) ferner einen Druckkorrektor (24) zum Korrigieren eines ausgehend von dem bereitgestellten Versorgungsdruck (Ps) erzeugten Vorsteuerdrucks (Pv1', Pv12) basierend auf wenigstens einer aktuellen Zustandsgröße des Schienenfahrzeugs aufweist, wobei der so erzeugte korrigierte Vorsteuerdruck (Pvc) in einen entsprechenden Bremszylinderdruck (Pb) umsetzbar ist.

8. Schienenfahrzeug mit wenigstens einer Bremsvorrichtung nach einem der vorhergehenden Ansprüche.

9. Verfahren zum Durchführen einer Notbremsung eines Schienenfahrzeugs, bei welchem wenigstens einem Bremszylinder (14) durch eine Druckregeleinrichtung (12) ein Bremszylinderdruck (Pb) bereitgestellt wird,
**dadurch gekennzeichnet, dass**
der Bremszylinderdruck (Pb) nach einem vorbestimmten Sicherheitsintegritätslevel generiert wird, welches aus wenigstens zwei unterschiedlichen Sicherheitsintegritätslevels ausgewählt wird, die in der Druckregeleinrichtung (12) zur Verfügung stehen.

10. Verfahren nach Anspruch 9, bei welchem
der Bremszylinderdruck (Pb) aus einem Vorsteuerdruck (Pv1) erzeugt wird, der durch einen elektro-pneumatischen Druckregler (20) ausgehend von einem Versorgungsdruck (Ps) nach einem vorbestimmten Sicherheitsintegritätslevel generiert wird, welches aus wenigstens zwei unterschiedlichen Sicherheitsintegritätslevels ausgewählt wird.

11. Verfahren nach Anspruch 9, bei welchem
der Bremszylinderdruck (Pb) aus einem ersten Vorsteuerdruck (Pv1), der durch einen elektro-pneumatischen Druckregler (20) ausgehend von einem Versorgungsdruck (Ps) nach einem ersten Sicherheitsintegritätslevel generiert wird, oder einem zweiten Vorsteuerdruck (Pv2), der durch einen pneumatischen Druckregler (28) ausgehend von einem Versorgungsdruck (Ps) nach einem dritten, vom ersten Sicherheitsintegritätslevel verschiedenen vorbestimmten Sicherheitsintegritätslevel generiert wird, erzeugt wird.

12. Verfahren nach Anspruch 10, bei welchem
der elektro-pneumatische Druckregler (20) bei Auswahl eines ersten Sicherheitsintegritätslevels einen ersten Vorsteuerdruck (Pv1) entsprechend einem Basis-Bremsdruck erzeugt und bei Auswahl eines vom ersten Sicherheitsintegritätslevel verschiedenen zweiten Sicherheitsintegritätslevels in Abhängigkeit von einer Last und/oder einer Geschwindigkeit des Schienenfahrzeugs einen ersten Vorsteuerdruck (Pv1) entsprechend einem im Vergleich zum Basis-Bremsdruck vergrößerten oder verkleinerten Bremsdruck erzeugt.

13. Verfahren nach Anspruch 10 oder 12, bei welchem
eine Wirkung eines niedrigeren Sicherheitsintegritätslevels überwacht wird und bei Unterschreiten eines vorbestimmten Grenzwerts für die Wirkung der Bremszylinderdruck (Pb) nach einem höheren Sicherheitsintegritätslevel generiert wird.

14. Verfahren nach einem der Ansprüche 9 bis 13, bei welchem
ein ausgehend von dem bereitgestellten Versorgungsdruck (Ps) erzeugter Vorsteuerdrucks (Pv1', Pv12) basierend auf wenigstens einer aktuellen Zustandsgröße des Schienenfahrzeugs korrigiert wird und der so erzeugte korrigierte Vorsteuerdruck (Pvc) dann in einen entsprechenden Bremszylinderdruck (Pb) umgesetzt wird.

15. Verfahren nach einem der Ansprüche 9 bis 14, bei welchem
die Auswahl eines Sicherheitsintegritätslevels während eines Notbremsvorgangs kontinuierlich durchgeführt wird.

## Claims

1. Brake device for carrying out an emergency braking operation of a rail vehicle, comprising:
at least one brake cylinder (14);
a pressure regulating device (12) for producing a brake cylinder pressure (Pb) for the brake cylinder (14); and
a control device (16) for actuating the pressure regulating device (12),
**characterised in that**
the control device (16) comprises a control unit (16i) and at least one further control unit (16ii), in each case for actuating the pressure regulating device (12), wherein the respective control units (16i, 16ii) of the control device (16) are designed in accordance with different safety integrity levels.

2. Brake device according to Claim 1, in which
the pressure regulating device (12) comprises an electro-pneumatic pressure regulator (20) which, starting from a delivered supply pressure (Ps), produces a pilot control pressure (Pv1) that can be converted into a corresponding brake cylinder pressure (Pb); and
the control device (16) has, as the one control unit (16i), a first controller (16a) which is designed in accordance with a first safety integrity level for actuating the electro-pneumatic pressure regulator (20) and, as a further control unit (16ii), a second controller (16b) which is designed in accordance with a second safety integrity level different from the first safety integrity level, for actuating the electro-pneumatic pressure regulator (20).

3. Brake device according to Claim 1, in which
the pressure regulating device (12) comprises an electro-pneumatic pressure regulator (2) which, starting from a delivered supply pressure (Ps), produces a first pilot control pressure (Pv1) which can be converted into a corresponding brake cylinder pressure (Pb), and also comprises a pneumatic pressure regulator (28) which, starting from the delivered supply pressure (Ps), produces a second pilot control pressure (Pv2) which can be converted into a corresponding brake cylinder pressure (Pb); and
the control device (16) has, as the one control unit (16i), a first controller (16a) which is designed in accordance with a first safety integrity level for actuating the electro-pneumatic pressure regulator (20) and, as a further control unit (16ii), a third controller (16c) which is designed in accordance with a third safety integrity level different from the first safety integrity level, for actuating the pneumatic pressure regulator (28).

4. Brake device according to Claim 2, in which
when actuated by the first controller (16a) of the control device (16), the electro-pneumatic pressure regulator (20) produces a first pilot control pressure (Pv1) that corresponds to a basic brake pressure, and when actuated by the second controller (16b) of the control device (16), as a function of a load and/or a speed of the rail vehicle it produces a first pilot control pressure (Pv1) that corresponds to a brake pressure higher or lower compared with the basic brake pressure.

5. Brake device according to any of the preceding claims, in which
the control device (16) is designed to monitor an actuation effect by a control unit with a lower safety integrity level, and if the said actuation effect falls below a predetermined limit value, to carry out the actuation of the pressure regulating device (12) with a higher safety integrity level.

6. Brake device according to any of Claims 3 to 5, in which
the pressure regulating device (12) comprises a pressure selector (30) for selecting the higher pilot control pressure (Pv12) between the first pilot control pressure and the second pilot control pressure (Pv1, Pv2).

7. Brake device according to any of the preceding claims, in which
the pressure regulating device (12) further comprises a pressure corrector (24) for correcting a pilot control pressure (Pv1', Pv2) produced starting from the delivered supply pressure (Ps), on the basis of at least one current condition parameter of the rail vehicle, wherein the corrected pilot control pressure (Pvc) so obtained can be converted to a corresponding brake cylinder pressure (Pb).

8. Rail vehicle with at least one brake device according to any of the preceding claims.

9. Method for carrying out an emergency braking operation of a rail vehicle, in which at least one brake cylinder (14) is supplied by a pressure regulating device (12) with a brake cylinder pressure (Pb),
**characterised in that**
the brake cylinder pressure (Pb) is generated in accordance with a predetermined safety integrity level, which is selected from at least two different safety integrity levels available in the pressure regulating device (12).

10. Method according to Claim 9, in which
the brake cylinder pressure (Pb) is produced from a pilot control pressure (Pv1) which is generated by an electro-pneumatic pressure regulator (20), starting from a supply pressure (Ps) and in accordance with a predetermined safety integrity level, which is selected from at least two different safety integrity levels.

11. Method according to Claim 9, in which
the brake cylinder pressure (Pb) is produced from a first pilot control pressure (Pv1) which is generated by an electro-pneumatic pressure regulator (20), starting from a supply pressure (Ps) and in accordance with a first safety integrity level, or from a second pilot control pressure (Pv2) generated by a pneumatic pressure regulator (28), starting from a supply pressure (Ps) and in accordance with a third predetermined safety integrity level different from the first safety integrity level.

12. Method according to Claim 10, in which
when a first safety integrity level is selected, the electro-pneumatic pressure regulator (20) produces a first pilot control pressure (Pv1) that corresponds to a basic brake pressure, and when a second safety integrity level different from the first safety integrity level is selected, then as a function of a load and/or a speed of the rail vehicle a first pilot control pressure (Pv1) that corresponds to a brake pressure higher or lower compared with the basic brake pressure is produced.

13. Method according to Claims 10 or 12, in which
the effect of a lower safety integrity level is monitored, and if the effect of the brake cylinder pressure (Pb) falls below a predetermined value, the brake cylinder pressure (Pb) is generated in accordance with a higher safety integrity level.

14. Method according to any of Claims 9 to 13, in which
a pilot control pressure (Pv1', Pv2) produced starting from the delivered supply pressure (Ps) is corrected on the basis of at least one current condition magnitude of the rail vehicle, and the pilot control pressure so corrected is then converted into a corresponding brake cylinder pressure (Pb).

15. Method according to any of Claims 9 to 14, in which
the selection of a safety integrity level is carried out continuously during an emergency braking process.

## Revendications

1. Système de frein pour effectuer un freinage d'urgence d'un véhicule ferroviaire, comportant :
au moins un cylindre (14) de frein ;
un dispositif (12) de régulation de la pression pour que le cylindre (14) de frein dispose d'une pression (Pb) de cylindre de frein ;
un dispositif (16) de commande pour commander le dispositif (12) de régulation de la pression,
**caractérisé en ce que**
le dispositif (16) de commande a une commande (16i) et au moins une autre commande (16ii) respectivement pour commander le dispositif (12) de régulation de la pression, les diverses commandes (16i, 16ii) du dispositif (16) de commande étant conformées suivant des niveaux différents d'intégrité de sécurité.

2. Système de frein suivant la revendication 1, dans lequel
le dispositif (12) de régulation de la pression a un régleur (20) de pression électropneumatique, qui à partir d'une pression (Ps) d'alimentation mise à disposition produit une pression (Pv1) pilote, qui peut être transformée en une pression (Pb) de cylindre de frein correspondante ;
le dispositif (16) de commande a comme la une commande (16i) une première commande (16a), qui est conformée suivant un premier niveau d'intégrité de sécurité, pour commander le régleur (20) de pression électropneumatique et comme une autre commande (16ii), une deuxième commande (16b), qui est conformée suivant un deuxième niveau d'intégrité de sécurité différent du premier niveau d'intégrité de sécurité, pour la commande du régleur (20) de pression électropneumatique.

3. Système de frein suivant la revendication 1, dans lequel
le dispositif (12) de régulation de la pression a un régulateur (20) de pression électropneumatique, qui à partir d'une pression (Ps) d'alimentation mise à disposition produit une première pression (Pv1) pilote, qui peut être transformée en une pression (Pb) de cylindre de frein correspondante, et un régulateur (28) de pression pneumatique qui, à partir de la pression (Ps) d'alimentation mise à disposition, produit une deuxième pression (Pv2) de pilote, qui peut être transformée en une pression (Pb) de cylindre de frein correspondante ;
le dispositif (16) de commande a comme la une commande (16i) une première commande (16a), qui est conformée suivant une premier niveau d'intégrité de sécurité, pour la commande du régleur (20) de pression électropneumatique et comme autre commande (16ii), une troisième commande (16c) qui est conformée suivant un troisième niveau d'intégrité de sécurité différent du premier niveau d'intégrité de sécurité, pour la commande du régleur (28) de pression pneumatique.

4. Système de frein suivant la revendication 2, dans lequel
le régleur (20) de pression électropneumatique produit, lors de la commande par la première commande (16a) du dispositif (16) de commande une première pression (Pv1) pilote correspondant à une pression de frein de base et lors d'une commande par la deuxième commande (16b) du dispositif (16) de commande en fonction d'une charge et/ou d'une vitesse du véhicule ferroviaire, une première pression (Pv1) pilote correspondant à une pression de frein plus grande ou plus petite que la pression de frein de base.

5. Système de freins suivant la revendication précédente dans lequel
le dispositif (16) de commande est conformé pour contrôler un effet de commande par une commande ayant un niveau d'intégrité de sécurité plus petit et, si l'effet de commande passe en dessous d'une valeur limite définie à l'avance, effectuer la commande du dispositif (12) de régulation de la pression par une commande ayant un niveau d'intégrité de sécurité plus haut.

6. Système de frein suivant l'une des revendications 3 à 5, dans lequel
le dispositif (12) de régulation de la pression a un sélecteur (30) de pression pour sélectionner une pression (Pv12) pilote plus grande de la première et de la deuxième pression (Pv1, Pv2) pilote.

7. Système de frein suivant l'une des revendications précédentes, dans lequel
le dispositif (12) de régulation de la pression a en outre un correcteur (24) de pression pour corriger une pression (Pv1', Pv12) pilote, produite à partir de la pression (Ps) d'alimentation mise à disposition, sur la base d'au moins une grandeur d'état en cours du véhicule ferroviaire, la pression (Pvc) pilote corrigée ainsi produite pouvant être transformée en une pression de cylindre de frein correspondante.

8. Véhicule ferroviaire ayant au moins un système de frein suivant l'une des revendications précédentes.

9. Procédé pour effectuer un freinage d'urgence d'un véhicule ferroviaire, dans lequel on met à disposition d'au moins un cylindre (14) de frein une pression (Pb) de cylindre de frein par un dispositif (12) de régulation de la pression,
**caractérisé en ce que**
on produit la pression (Pb) de cylindre de frein suivant un niveau d'intégrité de sécurité défini à l'avance, qui est choisi parmi au moins deux niveaux d'intégrité de sécurité différents, qui sont mis à disposition dans le dispositif (12) de régulation de la pression.

10. Procédé suivant la revendication 9, dans lequel
on produit la pression (Pb) de cylindre de frein à partir d'une pression (Pv1) pilote, que l'on produit par un régulateur (20) de pression électropneumatique à partir d'une pression (Ps) d'alimentation suivant un niveau d'intégrité de sécurité défini à l'avance, qui est sélectionné parmi au moins deux niveaux d'intégrité de sécurité différents.

11. Procédé suivant la revendication 9, dans lequel
on produit la pression (Pb) de cylindre de frein à partir d'une première pression (Pv1) pilote, qui est produite suivant un premier niveau d'intégrité de sécurité par un régleur (20) de pression électropneumatique à partir d'une pression (Ps) d'alimentation, ou d'une deuxième pression (Pv2) de pilote, qui est produite par un régleur (28) de pression pneumatique à partir d'une pression (Ps) d'alimentation suivant un troisième niveau d'intégrité de sécurité défini à l'avance différent du premier niveau d'intégrité de sécurité.

12. Procédé suivant la revendication 10, dans lequel,
le régleur (20) de pression électropneumatique produit, lors de la sélection d'un premier niveau d'intégrité de sécurité, une première pression (Pv1) pilote correspondant à une pression de frein de base et, lors de la sélection d'un deuxième niveau d'intégrité de sécurité différent du premier niveau d'intégrité de sécurité, produit, en fonction d'une charge et/ou d'une vitesse du véhicule ferroviaire, une première pression (Pv1) pilote correspondant à une pression de frein plus grande ou plus petite que la pression de frein de base.

13. Procédé suivant la revendication 10 ou 12, dans lequel
on contrôle un effet d'un niveau d'intégrité de sécurité plus bas et, si l'on passe en dessous d'une valeur limite définie à l'avance de l'effet de la pression (Pb) du cylindre de frein, on produit la pression (Pb) de cylindre de frein suivant un niveau d'intégrité de sécurité plus haut.

14. Procédé suivant l'une des revendications 9 à 13, dans lequel
on corrige une pression (Pv1', Pv12) pilote, produite à partir de la pression (Ps) d'alimentation mise à disposition, sur la base d'au moins une grandeur d'état en cours du véhicule ferroviaire et on transforme ensuite la pression (Pvc) pilote corrigée ainsi produite en une pression (Pb) de cylindre de frein correspondante.

15. Procédé suivant l'une des revendications 9 à 14, dans lequel
on effectue la sélection d'un niveau d'intégrité de sécurité en continu pendant une opération de freinage d'urgence.
